# FASCICULE DE BREVET EUROPEEN

(11) **EP 1 772 299 B1**
(45) Date de publication et mention de la délivrance du brevet: **05.03.2014**
(21) Numéro de dépôt: 06291542.6
(22) Date de dépôt: 03.10.2006
(51) Int. Cl.: B60J 5/06, E05D 1/02, E05D 1/04

(54) **Fourgon de transport et camion associé**
Aufleger mit einem Sattelzug
Trailer for transport with truck

(30) Priorité: 04.10.2005 FR 0510148
(43) Date de publication de la demande: 11.04.2007
(73) Titulaire: Grosse, Gérard, 76270 Neufchatel-en-Bray (FR)
(72) Inventeur: Grosse, Gérard, 76270 Neufchatel-en-Bray (FR)
(74) Mandataire: Blot, Philippe Robert Emile

(56) Documents cités:
- EP-B1- 0 464 878
- WO-A-03/018339
- DE-A1- 2 314 467
- GB-A- 2 145 040

## Description

La présente invention concerne un fourgon de transport, du type comportant :
- une caisse présentant au moins une ouverture latérale délimitée, d'une part, entre deux bords parallèles et d'autre part, entre deux montants d'extrémité ;
- une porte d'obturation de l'ouverture latérale, la porte comportant au moins deux équipages mobiles, chaque équipage mobile comportant :
   - un panneau coulissant d'obturation de l'ouverture supporté entre les deux bords longitudinaux parallèles et monté mobile à coulissement par rapport à la caisse en étant maintenu dans le plan de l'ouverture définie entre les deux bords longitudinaux parallèles, suivant la direction définie par ces deux bords,
   - au moins un vantail articulé par rapport au panneau coulissant, autour d'un axe s'étendant sensiblement dans le plan de l'ouverture suivant un bord du panneau coulissant, entre une position d'obturation de l'ouverture et une position d'ouverture dans laquelle il fait saillie hors de la caisse, le ou chaque vantail étant supporté par le panneau coulissant sur lequel il est articulé.

Un fourgon selon le préambule de la revendication 1 est décrit dans WO 03/018339.

Un fourgon est formé d'une caisse rigide, notamment parallélépipédique délimitant un volume propre à recevoir des marchandises à transporter. Un tel fourgon est supporté par le châssis d'un camion de transport de marchandises, d'une semi-remorque ou d'une remorque.

Le fourgon est couramment allongé avec deux faces latérales principales de plus grande longueur s'étendant de part et d'autre du camion et formant les flancs de celui-ci.

Pour permettre un chargement aisé du fourgon, il est connu que les faces latérales soient délimitées par des portes pleines obturant, lorsqu'elles sont en position d'obturation, une ouverture latérale définie par la caisse du fourgon et s'étendant suivant toute la face latérale du fourgon.

Les faces latérales du fourgon étant allongées, les portes d'obturation sont formées de plusieurs vantaux articulés les uns sur les autres autour d'axes verticaux parallèles les uns aux autres.

Ainsi, des chaînes de vantaux successifs sont formées, chaque chaîne étant articulée à une extrémité sur la caisse du camion suivant un axe d'articulation fixe par rapport à la caisse s'étendant sensiblement dans le plan de l'ouverture.

Ces portes sont difficiles à manoeuvrer et nécessitent des moyens d'articulation très résistants puisque ceux-ci doivent supporter toute la masse de la chaîne de vantaux.

On connaît par ailleurs des portes latérales formées de vantaux articulés successivement les uns aux autres en des sens opposés afin de permettre un repliement en accordéon ou en boustrophédon. Chaque vantail est articulé par rapport à la caisse, alternativement par son bord droit ou gauche, autour d'un axe vertical qui est glissant suivant la longueur de l'ouverture latérale de la caisse.

Pour l'obturation de l'ouverture, les vantaux sont tirés de sorte que ceux-ci s'alignent. La mise en place des vantaux par traction produit un écartement même mineur de ceux-ci les uns par rapport aux autres, de sorte que, lorsque les vantaux sont en position d'obturation, ceux-ci ne sont pas parfaitement jointifs.

D'autres agencements sont décrits notamment dans le document DE-100 45 851 et DE 103 14 378.

Ceux-ci prévoient que les faces latérales du fourgon soient obturées par des panneaux d'obturation coulissants sur lesquels sont articulés des vantaux pouvant être alignés dans l'ouverture entre des panneaux adjacents pour obturer celle-ci. Ces vantaux peuvent également être déplacés angulairement vers l'extérieur par rapport aux panneaux pour permettre l'accès à l'intérieur du fourgon au travers de l'ouverture.

A l'usage, on constate que ces fourgons sont relativement commodes d'accès mais que la sophistication de leur structure rend parfois le chargement du fourgon par l'arrière délicat au moyen de chariots élévateurs ou de transpalettes.

L'invention a pour but de proposer un fourgon de transport dont une face latérale peut être ouverte et dont les moyens d'obturation n'entravent pas le chargement notamment par l'arrière.

A cet effet, l'invention a pour objet un fourgon de transport du type précité, caractérisé en ce que lorsque les vantaux sont en position d'obturation, les vantaux et les panneaux sont jointifs et en contact et délimitent à l'intérieur du fourgon une surface lisse et continue.

Suivant des modes particuliers de réalisation, le fourgon comporte l'une ou plusieurs des caractéristiques suivantes :
- lorsque les vantaux sont en position d'obturation, l'écart entre les bords adjacents des vantaux et des panneaux et entre les vantaux suivant la surface lisse et continue est inférieure à 2 mm ;
- lorsque les vantaux sont en position d'obturation, les aspérités de la surface lisse et continue ont une hauteur mesurée perpendiculairement à la surface inférieure à 1 mm ;
- lorsque les vantaux sont en position d'obturation, les panneaux et les vantaux sont maintenus comprimés dans le plan d'obturation les uns dans le prolongement des autres entre les deux montants d'extrémité en prenant appui sur ceux-ci ;
- les vantaux et/ou les panneaux adjacents comportent des bords adjacents présentant des complémentarités de forme ;
- au moins l'un parmi les panneaux et les vantaux comprend au moins deux planches assemblées suivant des bords adjacents, les deux planches assemblées comportant, suivant leur épaisseur, pour l'une une rainure curviligne et pour l'autre une languette de forme complémentaire propre à assurer un accostage des deux planches par pivotement autour de leurs bords communs extérieurs et par emboîtement des rainure et languette, et les deux planches comportent en outre des moyens d'enclenchement élastique des deux planches pour assurer leur verrouillage ;
- la porte comporte, entre chaque panneau et chaque vantail articulé, un profilé élastique de liaison à mémoire de forme fixé sur le panneau et le vantail associé, et chaque panneau et chaque vantail articulé comportent, suivant leur épaisseur, pour l'une une rainure curviligne et pour l'autre une languette de forme complémentaire propre à assurer un accostage du panneau et du vantail par pivotement autour de leurs bords communs extérieurs et par emboîtement des rainure et languette ;
- deux vantaux adjacents chacun articulé sur un panneau coulissant comportent, suivant leurs bords adjacents, une nervure et une rainure complémentaires présentant des profils respectivement convergents et divergents vers leur extrémité ;
- la nervure comporte à son sommet un canal longitudinal délimitant avec la rainure, lorsque les vantaux sont en position d'obturation, un conduit de ruissellement d'eau ;
- le fourgon comporte deux rails de guidage des panneaux coulissants suivant des bords longitudinaux, lesquels rails sont amovibles par rapport à la caisse ;
- il comporte suivant au moins un bord longitudinal une glissière longitudinale et au moins un ensemble de gâche de crémone de fermeture d'un vantail, lequel ensemble de gâche est coulissante dans ladite glissière et comporte des moyens de blocage en position par rapport à la glissière ; et
- il comporte au moins deux panneaux coulissants successifs et, entre ces deux panneaux, deux vantaux articulés chacun sur un panneau coulissant, les deux vantaux étant articulés l'un à l'autre suivant des bords longitudinaux adjacents et la porte comporte, entre les deux vantaux articulés l'un sur l'autre, une charnière comprenant un élément de liaison articulé monté coulissant par rapport aux deux vantaux perpendiculairement à son axe d'articulation.

L'invention a enfin pour objet un camion comportant un fourgon tel que décrit ci-dessus.

L'invention sera mieux comprise à la lecture de la description qui va suivre, donnée uniquement à titre d'exemple, et faite en se référant aux dessins sur lesquels :
- la figure 1 est une vue en perspective d'un camion comportant un fourgon selon l'invention, dont la face latérale est obturée ;
- la figure 2 est une vue identique à celle de la figure 1 avec la face latérale partiellement ouverte ;
- la figure 3 est une vue en coupe longitudinale de la face latérale du fourgon dans la position de la figure 2;
- la figure 4 est une vue en section transversale du fourgon montrant le guidage de la partie haute d'un panneau coulissant ;
- la figure 5 est une vue en élévation d'un chariot de guidage d'un panneau coulissant ;
- la figure 6 est une vue identique à celle de la figure 4 montrant le guidage inférieur d'un panneau coulissant ;
- la figure 7 est une vue en section transversale d'un vantail d'une porte du fourgon ;
- la figure 8 est une vue en section transversale d'une planche d'un vantail ;
- les figures 9A et 9B sont des vues partielles en section d'un vantail montrant deux planches adjacentes respectivement en cours d'accouplement et après accouplement ;
- la figure 10 est une vue en section de deux planches d'extrémité de deux vantaux adjacents en position d'obturation ;
- la figure 11 est une vue en section transversale d'une planche d'extrémité articulée d'un vantail ;
- la figure 12 est une vue en section transversale d'un panneau coulissant ;
- la figure 13 est une vue en section transversale d'une planche d'extrémité articulée d'un panneau coulissant ;
- la figure 14 est une vue en section transversale d'un panneau coulissant montrant l'accouplement à une planche médiane ;
- la figure 15 est une vue en section transversale d'une articulation entre un panneau coulissant et un vantail ;
- la figure 16 est une vue en section transversale du profil d'articulation au repos ;
- la figure 17 est une vue en section transversale d'une planche d'extrémité d'un panneau coulissant d'extrémité du fourgon ;
- la figure 18 est une vue identique à celle de la figure 3 d'une variante de réalisation d'une porte d'obturation d'un fourgon selon l'invention ; et
- la figure 19 est une vue de détail de la charnière présente entre deux vantaux de la porte de la figure 18.

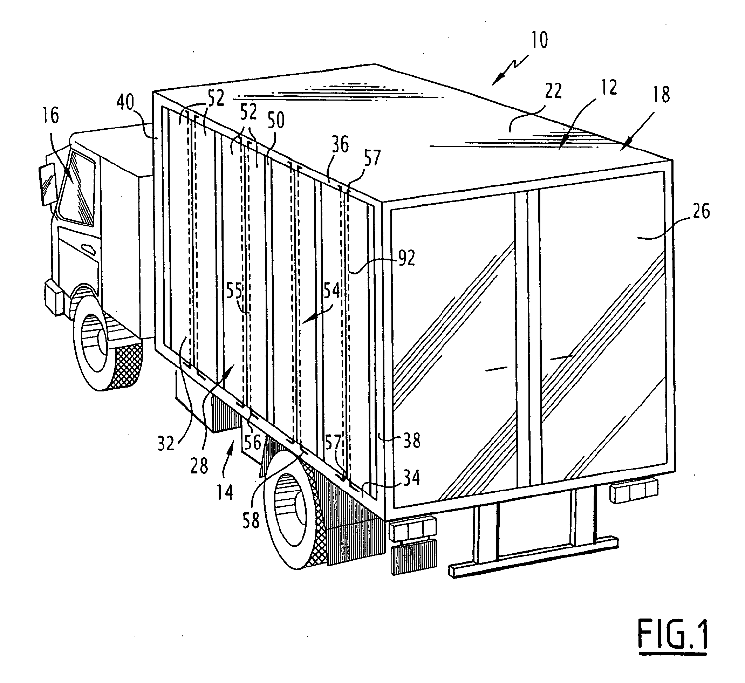

Le camion 10 illustré sur la figure 1 comporte un fourgon 12 porté par un châssis 14 d'une semi-remorque. Un tracteur 16 est prévu à l'avant de la semi-remorque.

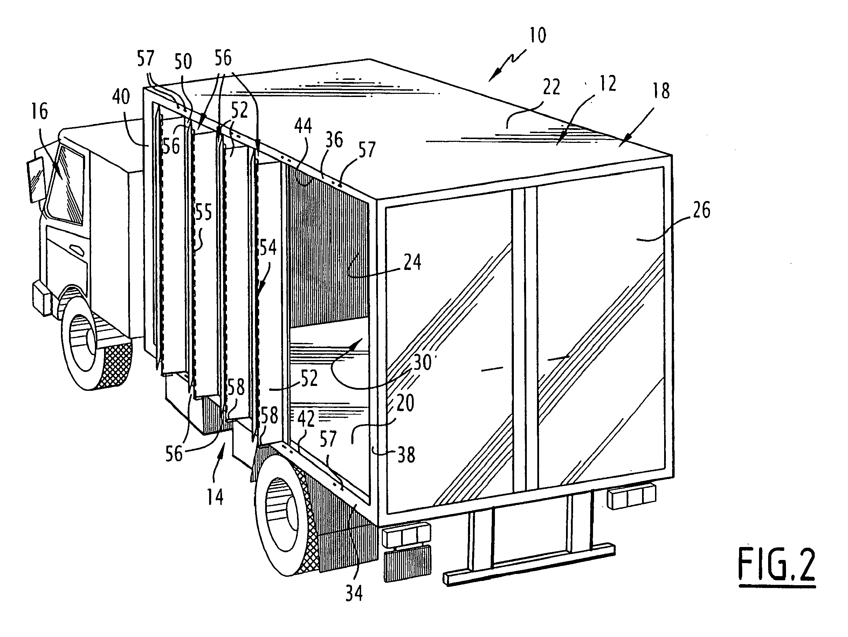

Comme connu en soi, le fourgon 12 comporte une caisse 18 à paroi pleine de forme générale parallélépipédique. Ainsi, la caisse comporte un plancher 20 visible sur la figure 2, un toit 22, une paroi avant 24 visible sur la figure 2 et une paroi arrière 26. La paroi arrière 26 est délimitée par une porte à deux vantaux articulés pouvant s'ouvrir vers l'extérieur et permettant le chargement du fourgon par l'arrière. La caisse 18 comporte en outre deux faces latérales ou flancs 28 suivant lesquels sont délimitées des ouvertures 30 chacune obturée par une porte latérale 32. Les flancs 28 s'étendent verticalement suivant la longueur du fourgon.

Chaque ouverture 30 est généralement rectangulaire et est délimitée par un bord longitudinal inférieur 34 et un bord longitudinal supérieur 36 parallèles l'un à l'autre et par deux montants verticaux 38, 40 s'étendant également parallèlement l'un à l'autre et supportant le toit 22.

Chaque bord longitudinal 34, 36 est équipé d'un rail 42, 44 permettant le coulissement de la porte 32 sensiblement dans le plan de l'ouverture 30.

La porte 32 comporte un ensemble de panneaux ou montants d'obturation 50 déplaçables seulement à coulissement dans le plan de l'ouverture 30 et un ensemble de vantaux 52 chacun articulé par rapport à un panneau 50 autour d'un axe X-X généralement vertical et s'étendant dans le plan de l'ouverture entre les bords opposés délimitant l'ouverture.

Chaque vantail 52 est articulé sur un panneau 50 et aucun vantail 52 n'est articulé seulement sur un autre vantail.

Ainsi, la porte est fermée d'au moins deux équipages mobiles à coulissement comportant chacun un panneau coulissant 50 et au moins un vantail 52 articulé sur le panneau 50.

La porte comporte par exemple six panneaux coulissants et dix vantaux articulés, la largeur des panneaux étant comprise entre 300 et 500 mm et par exemple égale à 400 mm alors que la largeur des vantaux est comprise entre 900 et 1 300 mm et par exemple égale à 1 100 mm. De préférence, la largeur des panneaux est inférieure à celle des vantaux, au moins dans un rapport du simple au double.

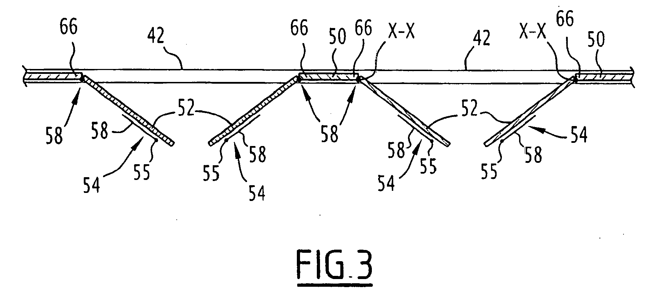

Plus précisément, et comme illustré sur la figure 3, chaque panneau 50 est formé d'une paroi pleine et plane généralement rectangulaire maintenue dans le plan de l'ouverture 30 par les rails 42, 44.

Chaque vantail 52 est équipé d'un mécanisme 54 d'immobilisation en position du vantail dans le plan de l'ouverture 30 par rapport à la caisse 18 du fourgon. Ce mécanisme comporte, comme connu en soi, une tringle verticale 55 articulée en rotation sur elle-même par rapport au vantail 52 et noyée dans l'épaisseur du vantail. Cette tringle comporte, à chaque extrémité supérieure et inférieure, des pênes 56 propres à coopérer chacun avec un ensemble de gâche comprenant une gâche complémentaire 57 (figure 2) fixée et intégrée dans le bord 34, 36 de l'ouverture. La tringle est assujettie en rotation à une poignée 58 de commande disposée transversalement et propre à s'appliquer contre le bord inférieur 34 de l'ouverture sous le vantail 52, lorsque le mécanisme 54 est verrouillé.

En variante un seul vantail sur deux est équipé d'un mécanisme d'immobilisation en position, le vantail adjacent étant retenu en position d'obturation par le vantail muni du mécanisme.

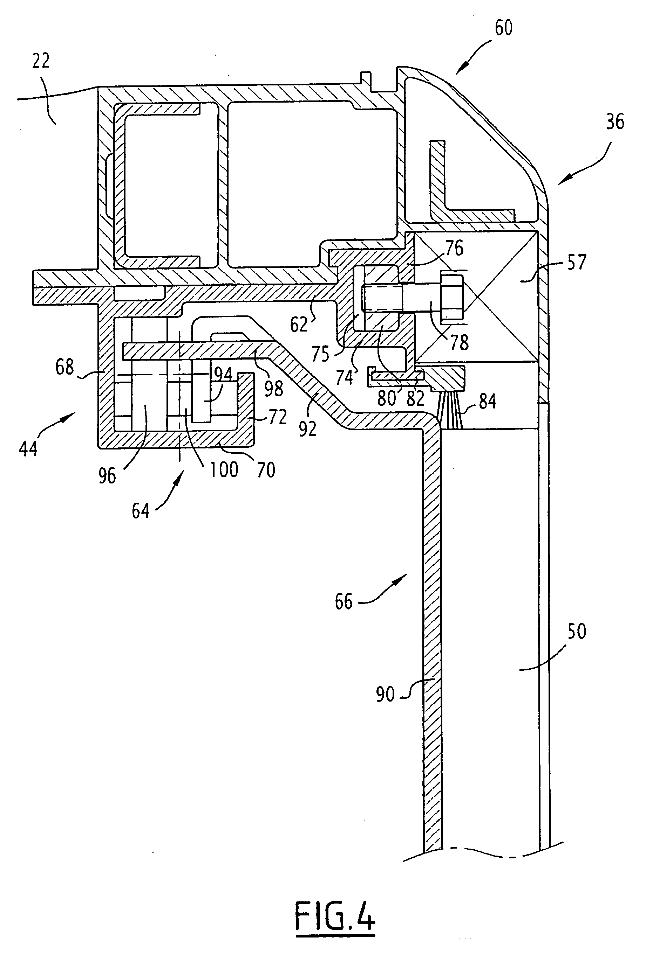

Sur la figure 4 est représenté à plus grande échelle le bord longitudinal supérieur 36 assurant le guidage des panneaux coulissants 50. Le bord 36 est équipé du rail 44. Ce dernier est porté par un profilé 60 bordant longitudinalement le toit 22 du fourgon. Le rail 44 est maintenu par emboîtement et par vissage ou rivetage sur le profilé 60 de sorte que le rail 44 est amovible et peut être remplacé facilement en cas d'usure.

Le rail 44 est formé d'un profilé extrudé en aluminium. Il présente une âme 62 d'accouplement au profilé 60. Cette âme porte un chemin de roulement 64 pour le guidage de galets de chariots 66 solidarisés à l'extrémité supérieure des panneaux coulissants 50.

Le chemin de roulement 64 est formé d'une gouttière en forme de J présentant une ouverture latérale pour permettre le passage des chariots 66. Cette gouttière présente une jambe de support 68 reliée à l'âme 62 et prolongée par un fond généralement horizontal 70 bordé par un rebord 72. Le rebord s'étend parallèlement à la jambe de support 68 et perpendiculairement au fond 70. Le fond 70 s'étend parallèlement à l'âme 62.

En outre, l'âme 62 est prolongée par une glissière 74 délimitant un canal 75 partiellement refermé par deux lèvres en saillie 76. La glissière 74 est soit continue soit discontinue suivant la longueur de la caisse. Les ensembles de gâches de crémones sont assujettis à la glissière 74.

Plus précisément, un ensemble de gâche est constitué par deux vis formant tirants 78 permettant de relier une gâche 57 de crémone à une plaque taraudée 80 engagée dans le canal 75. Les vis permettent lorsqu'elles sont serrées de plaquer la plaque 80 contre les lèvres 76 et ainsi immobiliser axialement la plaque 80 et la gâche de crémone 57 par rapport au rail en enserrant la lèvre 76 entre la gâche de crémone et la plaque 80. Lorsqu'elles sont desserrées, la gâche est libre de coulisser suivant la longueur de la glissière 74.

En outre, le rail 44 présente une patte 82 s'étendant longitudinalement sur laquelle est engagée une brosse 84 s'étendant sur toute la longueur de l'ouverture et dont les poils sont propres à s'appliquer sur l'extrémité supérieure des panneaux 50 et des ventaux 52 pour assurer une obturation et une étanchéité satisfaisantes.

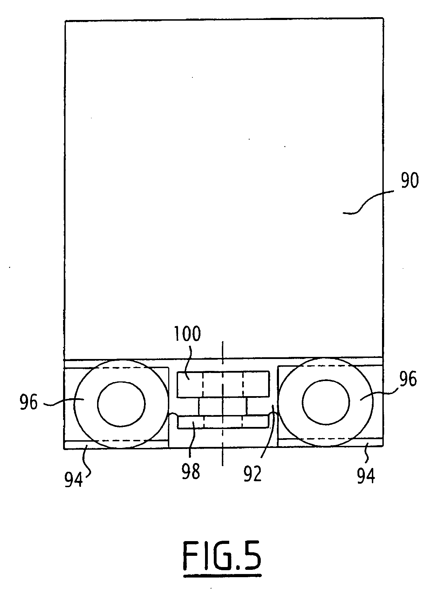

Comme illustré plus en détail sur la figure 5, chaque chariot 66 présente une platine de fixation 90 prolongée à une extrémité par un bras coudé 92 présentant, à son extrémité libre, deux pattes recourbées 94 propres à supporter deux galets 96 rotatifs articulés autour d'axes perpendiculaires à la platine 90 ainsi qu'une troisième patte médiane 98 supportant un unique galet 100 rotatif autour d'un axe parallèle à la platine 90.

Lorsque le chariot 100 est engagé dans le rail 44, comme illustré sur la figure 4, les galets 96 s'appuient sur le fond 70 du chemin de roulement 64 alors que le galet 100 est confiné entre la jambe 68 et le rebord 72 pour assurer un positionnement transversal des panneaux coulissants 50.

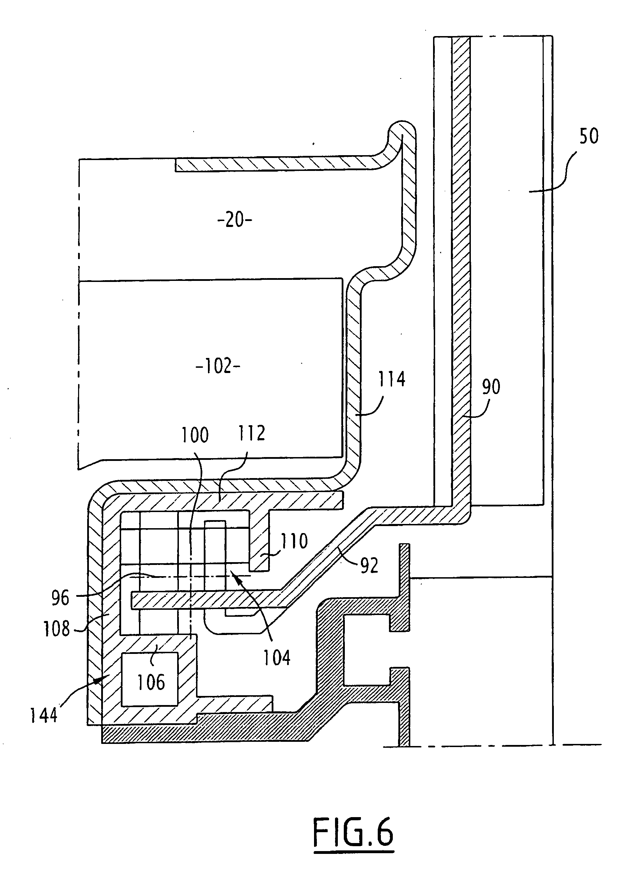

Le rail 42 disposé en partie basse est fixé sous les traverses 102 supportant le plancher du fourgon, comme visible sur la figure 6. Comme le rail supérieur, le rail inférieur 42 définit un chemin de roulement 104 délimité par un fond 106 supporté par une jambe 108 en regard de laquelle est disposé un rebord 110 supporté par une lame 112 à l'extrémité de laquelle est prévue la jambe 108. L'âme 112 est propre à assurer la liaison du rail 42 au plancher 20 du fourgon par l'intermédiaire d'une jupe enveloppante 114.

Suivant un mode de réalisation particulier, le rail 42 est venu de matière avec la jupe 114 enveloppant le plancher du fourgon suivant son épaisseur.

A l'extrémité inférieure des panneaux 50, les platines 90 des chariots sont introduites dans l'épaisseur des panneaux et y sont maintenues par des vis ou des rivets. Le bras 92 s'introduit jusqu'au chemin de roulement dans lequel les galets 96 roulent sur le fond 106 alors que le galet 100 est maintenu entre la jambe 108 et le rebord 110.

A l'extrémité supérieure des panneaux coulissants 50, et comme illustré sur la figure 4, les platines 90 des chariots sont vissées ou rivetées sur la surface intérieure des panneaux 50, afin de pouvoir monter les panneaux sur le fourgon.

Pour le montage, les chariots inférieurs sont d'abord introduits dans le rail 42, après avoir été montés sur les panneaux 50 puis seulement après les extrémités supérieures des panneaux sont liées aux chariots supérieurs préalablement introduits dans le chemin de roulement 64.

Suivant un premier mode de réalisation, deux chariots 66 sont prévus à chaque coin des bords supérieur et inférieur des panneaux. En variante, seul le bord supérieur est équipé de deux chariots 66 disposés au voisinage des coins, alors que le bord inférieur n'est équipé que d'un chariot médian 66 ou inversement.

Les galets ainsi positionnés constituent un moyen empêchant la rotation du panneau 50 sur lui-même autour d'un axe vertical.

Dans le mode de réalisation des figures 1 à 5, un vantail 52 est articulé suivant le bord vertical de chaque panneau 50, hormis pour les panneaux d'extrémité. Chaque vantail 52 est délimité par une paroi pleine, plane et rectangulaire dont la longueur s'étendant verticalement correspond à la longueur des panneaux 50 et dont la largeur s'étendant horizontalement est supérieure à celle des panneaux 50.

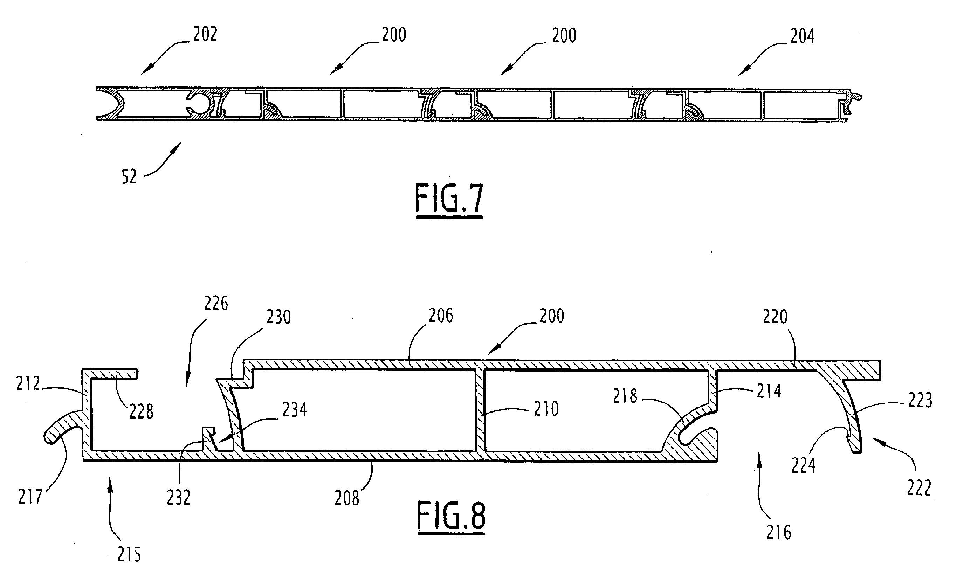

Un vantail 52 est représenté en détail en section sur la figure 7. Ce vantail 52 est formé de planches génériques assemblées 200, d'une planche d'accouplement 202 et d'une planche d'articulation 204. Suivant la largeur du vantail, un nombre de planches génériques différent est retenu.

Chacune des planches est formée d'un profilé d'aluminium s'étendant sur toute la hauteur du vantail. Les profilés sont tous de forme généralement rectangulaire et présentent deux faces principales rigoureusement parallèles et planes 206, 208 reliées l'une à l'autre par des voiles transversaux 210 comme illustré sur la figure 8.

A leurs extrémités longitudinales, les profilés formant des planches génériques 200 visibles en détail sur la figure 8 présentent des parois 212, 214 intégrées dans des profils 215, 216 de guidage et de maintien complémentaires permettant un accostage et une liaison des planches successives par basculement.

Plus précisément, dans le profil mâle 215, chaque planche présente une languette curviligne 217 faisant saillie vers l'extérieur par rapport à la paroi d'extrémité 212 depuis la partie médiane de celle-ci. Cette languette curviligne est formée d'une portion de cylindre centrée sur un axe s'étendant sensiblement à l'intersection entre la face extérieure 208 et la paroi d'extrémité 212 du profilé.

Le profil femelle 216 formé au-delà de la paroi d'extrémité opposée 214 présente une rainure curviligne 218 de forme complémentaire à la languette 217. Cette rainure débouche dans la partie médiane de la paroi d'extrémité 214.

Par ailleurs, les planches comportent des organes d'accrochage complémentaires par enclenchement élastique. Ceux-ci sont prévus au voisinage des parois longitudinales d'extrémité 212, 214 des planches. Un premier organe femelle est formé en arrière de la languette 217 alors qu'un organe d'accrochage mâle complémentaire est formé en regard de l'évidement 218.

Plus précisément, la face intérieure 206 se prolonge au-delà de la paroi d'extrémité 214 par une membrure 220 formant la portion d'extrémité de la face plane 206. Cette membrure porte un crochet 222 formé d'une jambe 223 généralement courbe faisant saillie par rapport à la membrure 220 suivant l'épaisseur du profilé. Cette jambe présente à son extrémité un ergot 224.

A l'inverse, à son autre extrémité, la planche présente un canal 226 s'ouvrant dans la face 206. Ce canal est délimité par deux rebords 228, 230 en retrait par rapport à la face 206 et propres à supporter la membrure 220 d'une planche adjacente. Le fond du canal présente un redan (cran) 232 délimitant une chambre de retenue 234 pour le crochet 222.

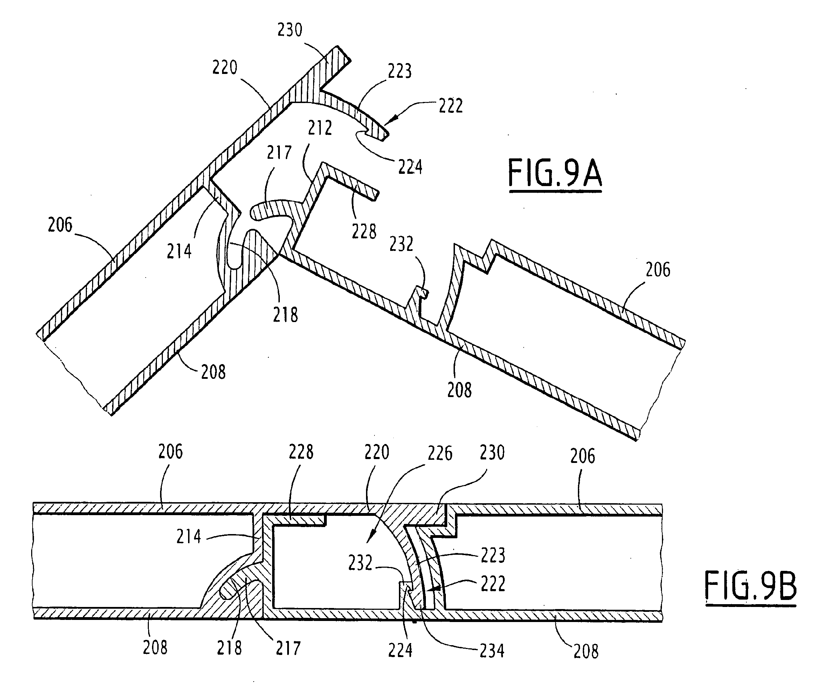

Comme illustré sur les figures 9A et 9B, la liaison des planches successives 200 s'effectue d'abord par mise au contact des deux planches suivant les arrêtes d'intersection des faces extérieures 208 et des parois d'extrémité 212, 214, puis par basculement autour de cet axe des planches l'une vers l'autre afin de les amener dans un même plan. La languette 217 pénètre d'abord dans la rainure 218. Les profils adaptés et complémentaires en courbe de la languette 217 et de la rainure 218 assurent un guidage et un accostage facile des deux planches. Le déplacement angulaire se poursuit jusqu'à ce que l'ergot 224 franchisse le redan 232 et se libère dans la chambre de retenue 234. Dans cette position, le redan 232 et l'ergot 224 assurent la retenue des deux planches dans une position telle que les faces 206 des deux planches adjacentes s'étendent rigoureusement dans un même plan, la position des deux planches étant définie par la languette 217 et la rainure 218.

Les planches d'accouplement 202 sont de deux types. Elles sont utilisées par paire complémentaire sur des vantaux opposés. Elles présentent suivant un premier bord longitudinal un profil de guidage et de maintien mâle 215 identique à celui décrit en regard de la figure 8. En arrière du canal 226, le profilé délimite un conduit 238 de section généralement cylindrique. Ce conduit est adapté pour recevoir la crémone 55 d'immobilisation du vantail.

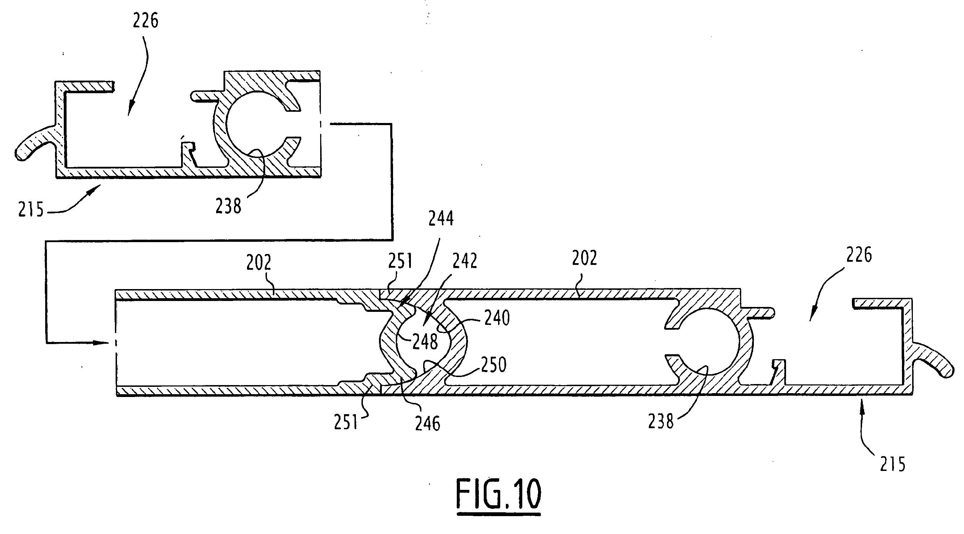

Suivant son autre bord latéral, le profil d'extrémité comporte l'un ou l'autre de deux reliefs complémentaires illustrés sur la figure 10. Ainsi, des ventaux adjacents propres à être engagés l'un avec l'autre présentent ces deux reliefs complémentaires.

Un premier profil femelle noté 240 présente ainsi une rainure longitudinale 242 présentant un profil divergeant vers l'extérieur. Au contraire, l'autre planche d'extrémité présente un profil mâle 244 formé d'une nervure 246 représentant un profil convergeant vers son extrémité délimitant le sommet. Ce sommet est brisé par un canal longitudinal 248 débouchant au sommet de la nervure. Ainsi, comme illustré sur la figure 10 lorsque la nervure 246 est reçue dans la rainure 242, le canal délimite avec la rainure un conduit 250 de ruissellement des eaux.

A sa base de chaque côté, la nervure 246 délimite avec les faces intérieure 206 et extérieure 208 un épaulement 251 permettant l'encastrement des faces intérieure et extérieure du vantail associé, de sorte que les deux faces des deux vantaux soient en affleurement sans jeu.

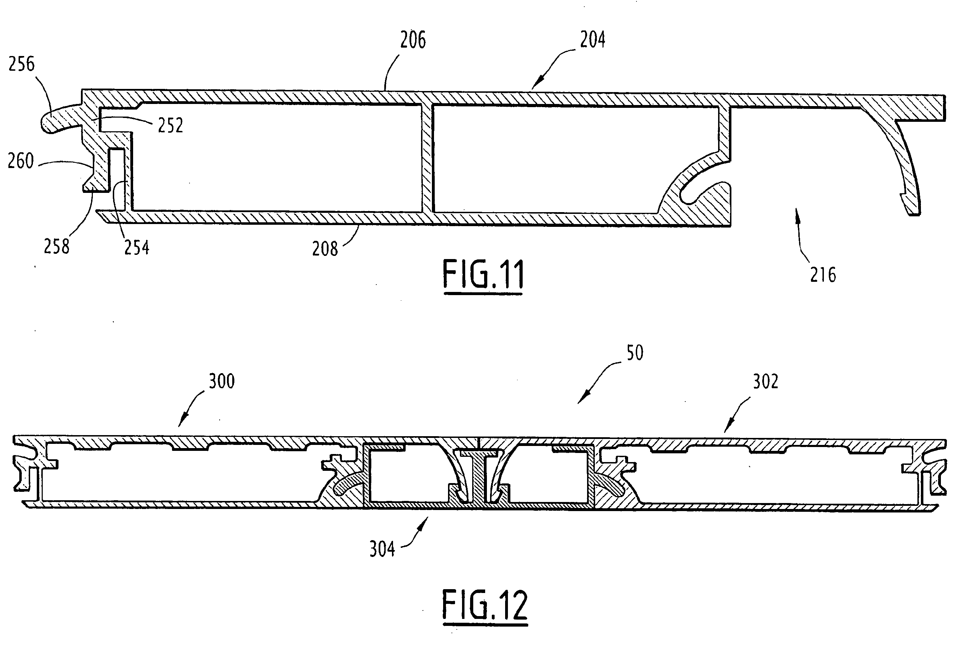

Sur la figure 11 est représentée une planche d'articulation 204 d'un vantail 52. Celle-ci présente suivant un bord longitudinal un profil de guidage et de maintien 216 tel qu'illustré sur la figure 8. Suivant son autre bord longitudinal, elle présente une paroi d'extrémité 252 dans laquelle est formé un canal 254 de réception d'une charnière, et depuis laquelle une languette curviligne 256 identique à la languette 217 fait saillie.

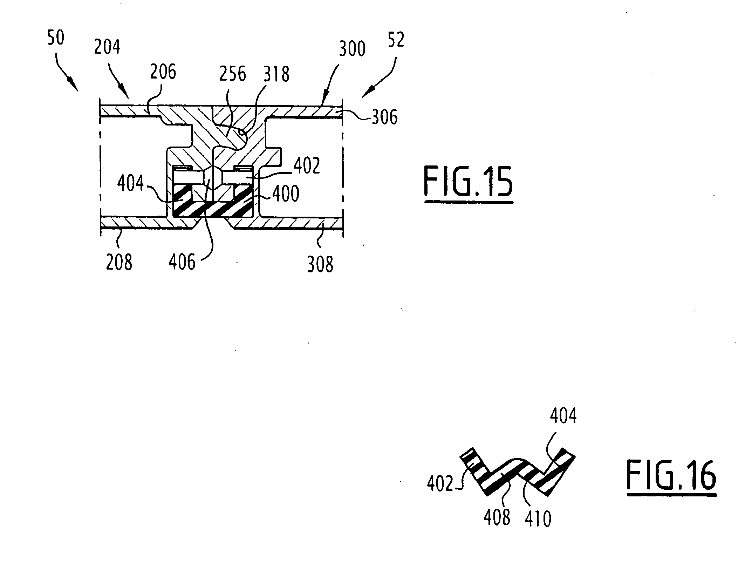

Le canal 254 présente une forme générale de L. Il s'ouvre à l'extrémité d'une branche du L au travers de la paroi 252, alors que l'autre branche du L s'étend suivant l'épaisseur de la paroi en étant surplombé par une lèvre 258. Cette lèvre présente un creux 260 de réception de têtes de rivet comme expliqué ultérieurement en regard de la figure 15.

Un panneau 50 est illustré sur la figure 12. Celui-ci est constitué de deux planches d'articulation 300, 302 symétriques l'une de l'autre par rapport à un plan longitudinal médian du vantail ainsi que d'une planche médiane d'interconnexion 304 interposée entre les deux planches 300, 302 et assurant leur liaison.

Les profilés 300, 302, 304 représentent comme les profilés 200, 202, 204 des faces principales internes et externes parallèles 306, 308 reliées par des parois transversales.

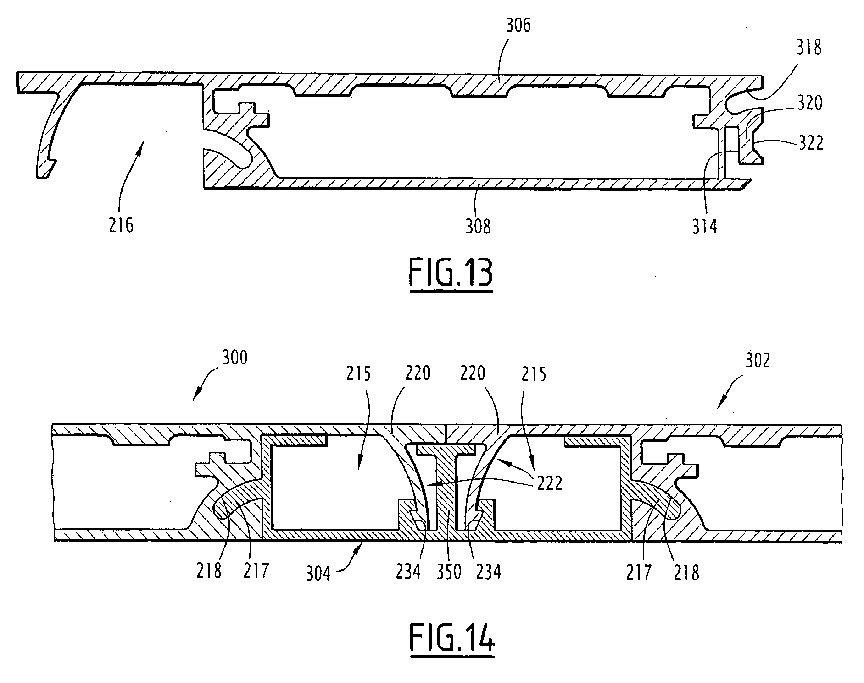

La planche d'extrémité 300 est représentée à plus grande échelle sur la figure 13. Elle présente suivant un bord longitudinal un profilé femelle de guidage et de solidarisation 216 tel que celui décrit sur la figure 8. Le bord longitudinal opposé de la planche présente au contraire un canal 314 de réception d'une charnière ainsi qu'une rainure curviligne 318 de réception d'une languette curviligne 256. Le canal 314 est identique au canal 254 de la planche d'articulation 204 et est délimité par une lèvre 320 présentant un creux 322. La rainure curviligne 318 présente une forme et une position complémentaires à celles de la languette 256 pour permettre un accostage par rotation des deux planches d'articulation.

La planche médiane d'interconnexion 302 comporte disposés côte à côte deux profils mâles de guidage et de solidarisation 215 séparés par une âme médiane 350 par rapport à laquelle ils sont symétriques l'un de l'autre. L'épaisseur de l'âme 350 est telle que les deux membrures 220 des deux planches d'articulation 300, 302 s'appliquent exactement l'une contre l'autre en affleurement lorsque les planches d'articulation sont reliées à la planche d'interconnexion 304 comme illustré sur la figure 14. Dans cette position, et comme il est exposé en regard de la figure 9, les languettes 217 sont engagées par rotation dans les rainures curvilignes 218, les crochets 222 étant engagés élastiquement dans les cavités 234.

L'articulation entre un vantail 52 et un panneau coulissant de support 50 est illustré à plus grande échelle sur la figure 15. Sur cette figure, on reconnaît une planche d'articulation 204 d'un vantail 52 et une planche d'articulation 300 associé d'un panneau coulissant 50.

Les parois longitudinales des deux planches d'articulation présentent une languette 256 et une rainure 318 curvilignes complémentaires dont l'axe est disposé sensiblement dans le plan des faces extérieures 208, 308 des deux planches lorsque celles-ci sont coplanaires.

La charnière est formée d'un profilé élastique 400 ayant, lorsque les deux planches sont alignées une section générale en forme de U. Chaque branche du U notée 402, 404 est reçue dans un canal de réception 254, 314 du canal en forme de L. Des rivets 406 sont disposés à intervalles réguliers suivant la longueur des planches pour retenir la charnière dans les canaux. Les têtes de rivets de retenue sont reçues dans les creux 260 et 322.

Comme illustré sur la figure 16, le profilé élastique présente au repos une forme de W. Plus précisément, on reconnaît sur cette figure les deux branches 402, 404 destinées à être engagées dans les canaux de retenue. Les deux bras notés 408, 410 reliant ces deux branches par rapport auxquels ils sont perpendiculaires forment un angle de 135° et sont propres à former l'âme du U lorsque les deux bras 408, 410 sont ramenés dans le même plan.

On comprend ainsi, que lorsque les vantaux sont libres, ceux-ci se placent dans une position de mi-ouverture délimitant un angle d'environ 45° avec les panneaux voisins, sous la seule action de l'élasticité de la charnière.

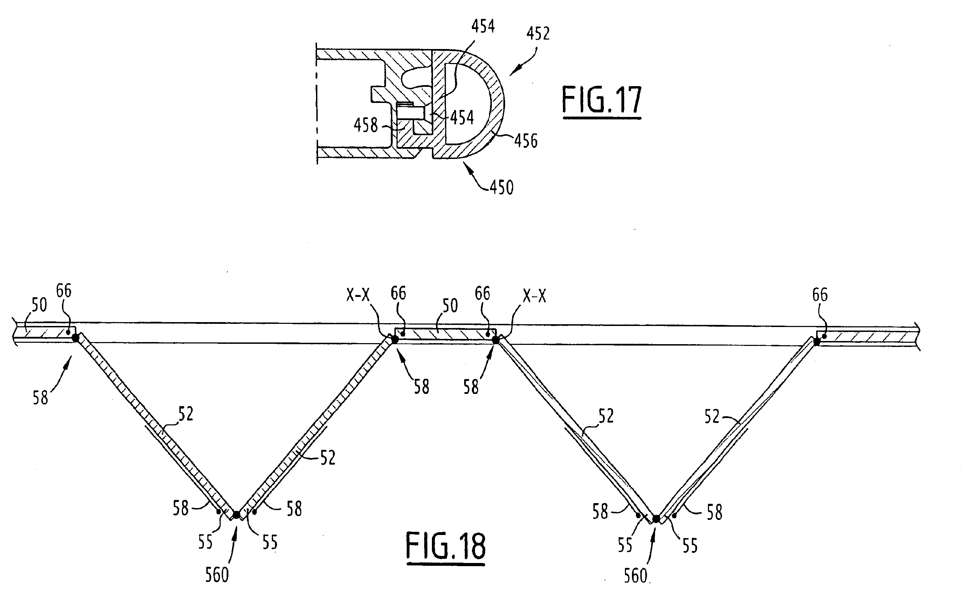

Enfin, et comme illustré sur la figure 17, les panneaux d'extrémité disposés le long des montants 38, 40 présentent, suivant leur bord en regard du montant, un patin d'appui 450 constitué d'un profilé élastique. Ce patin comporte un boyau 452 ayant une section en forme de D présentant une surface plane 454 d'appui sur le profilé et une surface courbe 456 d'appui sur le montant en regard. Il présente en outre suivant toute sa longueur une membrure de retenue 458 qui est engagée dans un canal de réception 314 de la planche d'articulation du panneau et y est retenue par des rivets 454.

Les panneaux 50 sont montés coulissants suivant toute la longueur des rails 42, 44 et chaque vantail 52 est articulé entre une position contrainte d'obturation dans laquelle il s'étend dans le plan de l'ouverture dans le prolongement des panneaux et une position libre d'ouverture dans laquelle il s'étend perpendiculairement au panneau 50 sur lequel il est articulé vers l'extérieur de la caisse.

Sur les figures 2 et 3, la porte est représentée dans une position partiellement repliée dans laquelle les panneaux 50 sont rapprochés les uns des autres et les vantaux 52 intercalés entre les panneaux 50 sont seulement partiellement repliés l'un vers l'autre et constituent des secteurs angulaires faisant saillie vers l'extérieur de la caisse.

On conçoit que le rapprochement des panneaux 50 et le repliement des vantaux deux à deux l'un sur l'autre, permet de dégager l'ouverture 30 sur l'essentiel de son étendue. En revanche, dans la position illustrée sur la figure 1, alors que les panneaux et les vantaux s'étendent dans un même plan, l'ouverture 30 est totalement obturée.

Dans la position de la figure 1, pour assurer une tenue satisfaisante, chaque vantail ou un vantail sur deux est immobilisé par rapport à la caisse par le mécanisme de verrouillage rotatif.

Le mécanisme de verrouillage provoque une mise en compression des vantaux et des panneaux 50 dans le plan de l'ouverture, garantissant ainsi une étanchéité satisfaisante et une continuité intérieure optimale.

Ainsi, lorsque les vantaux sont en position d'obturation, les vantaux et les panneaux sont jointifs et délimitent à l'intérieur du fourgon une surface lisse et continue.

De préférence, les profils sont ajustés de sorte que lorsque les vantaux sont en position d'obturation, l'écart entre les bords adjacents des vantaux et des panneaux et entre les vantaux suivant la surface intérieure lisse et continue qui est inférieure à 2 mm.

De même, lorsque les vantaux sont en position d'obturation, les aspérités de la surface lisse et continue ont une hauteur mesurée perpendiculairement à la surface qui est inférieure à 1 mm.

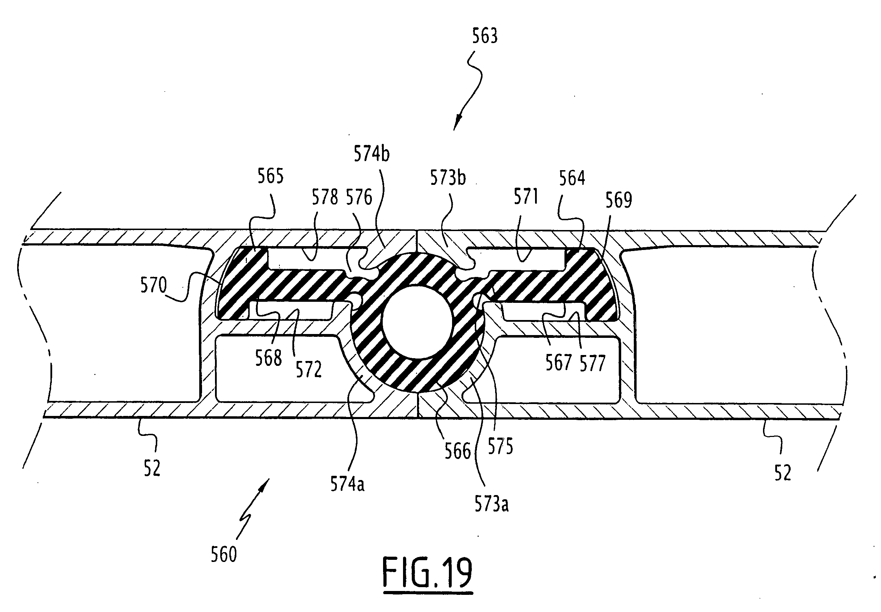

Dans le mode de réalisation des figures 18 et 19 les vantaux adjacents 52, chacun articulé sur des panneaux successifs, sont reliés l'un à l'autre par leurs bords verticaux adjacents par des charnières 560 coulissantes dont une est représentée en détail sur la figure 19.

Sur cette figure, on a représenté deux vantaux 52 reliés entre eux par un élément de liaison 563 comprenant des parties en forme de bourrelets latéraux 564 et 565, reliés à un bourrelet central 566 par des bandes venues de moulage 567 et 568.

L'élément de liaison 563 est réalisé en une matière plastique qui présente une haute résistance élastique et une bonne tenue à l'usure, aux intempéries et aux vieillissements. Elle présente en outre avantageusement une mémoire de forme.

Les bourrelets latéraux 564 et 565 de l'élément de liaison sont de section pleine, à peu près rectangulaire et dont la face 569, 570 opposée à la bande de liaison 567, 568 correspondante, est bombée.

Les bourrelets 564 et 565 sont engagés chacun dans une rainure latérale 571, 572 du vantail 52 correspondant. Chacune rainures 571, 572 est délimitée par des rebords 573a, 573b ; 574a, 574b ménageant respectivement des fentes 575, 576 traversées par les bandes 567, 568 de liaison des bourrelets entre eux.

Chacune des rainures 571, 572 de réception d'un bourrelet latéral 564, 565 correspondant de l'élément de liaison 563, présente une profondeur supérieure à la section du bourrelet qu'elle contient, de manière à définir une chambre respective 577, 578 permettant un déplacement du bourrelet latéral 564, 565 correspondant dans une direction transversale à la direction de la rainure 571, 572 afin de permettre au dispositif d'articulation d'absorber les décalages éventuels qui se produisent lors de déplacements angulaires des vantaux 52 l'un par rapport à l'autre.

Lorsque les vantaux sont alignés l'un avec l'autre, les rebords 573a, 573b ; 574a, 574b définissent entre eux un logement pour le bourrelet central 566 de forme annulaire de l'élément de liaison 563.

Lorsque les vantaux 52 sont juxtaposés, les rebords 573a, 573b, 574a, 574b s'étendent côte à côte assurant la continuité des surfaces correspondantes.

Le recours, pour les charnières 560, à des charnières à glissement permet que le mécanisme de la charnière soit intégré dans l'épaisseur des vantaux et que celui-ci ne fasse ainsi pas saillie à l'intérieur de la caisse, lorsque la porte est en position d'obturation. Le recours à de telles charnières est rendu possible par le fait que chaque vantail est individuellement supporté par un panneau 50.

Les panneaux 50 participent par ailleurs au support mécanique du toit 12.

## Revendications

1. Fourgon de transport (12) comportant :
- une caisse (18) présentant au moins une ouverture latérale (30) délimitée, d'une part, entre deux bords parallèles (34, 36) et d'autre part, entre deux montants d'extrémité (38, 40) ;
- une porte (32) d'obturation de l'ouverture latérale (30), la porte comportant au moins deux équipages mobiles (50, 52), chaque équipage mobile comportant :
. un panneau coulissant (50) d'obturation de l'ouverture supporté entre les deux bords longitudinaux parallèles (34, 36) et monté mobile à coulissement par rapport à la caisse en étant maintenu dans le plan de l'ouverture (30) définie entre les deux bords longitudinaux parallèles (34, 36), suivant la direction définie par ces deux bords (34, 36),
. au moins un vantail articulé par rapport au panneau coulissant (50), autour d'un axe (X-X) s'étendant sensiblement dans le plan de l'ouverture (30) suivant un bord du panneau coulissant, entre une position d'obturation de l'ouverture (30) et une position d'ouverture dans laquelle il fait saillie hors de la caisse, le ou chaque vantail (52) étant supporté par le panneau coulissant (50) sur lequel il est articulé,
. une charnière (400) d'articulation du vantail (52) par rapport au panneau coulissant (50)
dans lequel, lorsque les vantaux (52) sont en position d'obturation, les vantaux (52) et les panneaux (50) sont jointifs et en contact et délimitent à l'intérieur du fourgon une surface lisse et continue,
**caractérisé en ce que** chaque panneau (50) et chaque vantail articulé (52) comportent, suivant leur épaisseur, pour l'un une rainure curviligne (318) et pour l'autre une languette (256) de forme complémentaire propres à assurer un accostage du panneau (50) et du vantail (52) par pivotement autour de leurs bords communs extérieurs et par emboîtement des rainure et languette, et **en ce que** l'axe des languette (256) et rainure (318) curvilignes complémentaires est disposé sensiblement dans le plan des faces extérieures (208, 308) des vantail (52) et panneau coulissant (50) lorsque ceux-ci sont coplanaires.

2. Fourgon selon la revendication 1, **caractérisé en ce que**, lorsque les vantaux (52) sont en position d'obturation, l'écart entre les bords adjacents des vantaux (52) et des panneaux (50) et entre les vantaux (52) suivant la surface lisse et continue est inférieure à 2 mm.

3. Fourgon selon la revendication 1 ou 2, **caractérisé en ce que**, lorsque les vantaux (52) sont en position d'obturation, les aspérités de la surface lisse et continue ont une hauteur mesurée perpendiculairement à la surface inférieure à 1 mm.

4. Fourgon selon l'une quelconque des revendications précédentes, **caractérisé en ce que**, lorsque les vantaux (52) sont en position d'obturation, les panneaux (50) et les vantaux (52) sont maintenus comprimés dans le plan d'obturation les uns dans le prolongement des autres entre les deux montants d'extrémité (38, 40) en prenant appui sur ceux-ci.

5. Fourgon selon l'une quelconque des revendications précédentes, **caractérisé en ce qu'**au moins l'un parmi les panneaux et les vantaux comprend au moins deux planches assemblées (200, 202, 204 ; 300, 302, 304) suivant des bords adjacents, les deux planches assemblées comportant, suivant leur épaisseur, pour l'une une rainure curviligne (218) et pour l'autre une languette (217) de forme complémentaire propre à assurer un accostage des deux planches par pivotement autour de leurs bords communs extérieurs et par emboîtement des rainure et languette, et **en ce que** les deux planches comportent en outre des moyens d'enclenchement élastique (222, 234) des deux planches pour assurer leur verrouillage.

6. Fourgon selon l'une quelconque des revendications précédentes, **caractérisé en ce que** la porte comporte, entre chaque panneau et chaque vantail articulé, un profilé élastique (400) de liaison à mémoire de forme fixé sur le panneau (50) et le vantail associé (52).

7. Fourgon selon l'une quelconque des revendications précédentes, **caractérisé en ce que** deux vantaux adjacents (52) chacun articulé sur un panneau (50) coulissant comportent, suivant leurs bords adjacents, une nervure (246) et une rainure (242) complémentaires présentant des profils respectivement convergents et divergents vers leur extrémité.

8. Fourgon selon la revendication 7, **caractérisé en ce que** la.nervure (246) comporte à son sommet un canal longitudinal (248) délimitant avec la rainure (246), lorsque les vantaux sont en position d'obturation, un conduit (250) de ruissellement d'eau.

9. Fourgon selon l'une quelconque des revendications précédentes, **caractérisé en ce qu'**il comporte deux rails (42, 44) de guidage des panneau coulissant suivant des bords longitudinaux, lesquels rails (42, 44) sont amovibles par rapport à la caisse (18).

10. Fourgon selon l'une quelconque des revendications précédentes, **caractérisé en ce qu'**il comporte suivant au moins un bord longitudinal une glissière longitudinale (74) et au moins un ensemble de gâche (57, 78, 80) de crémone de fermeture d'un vantail (52), lequel ensemble de gâche (57, 78, 80) est coulissante dans ladite glissière (74) et comporte des moyens (78) de blocage en position par rapport à la glissière (74).

11. Fourgon selon l'une quelconque des revendications précédentes, **caractérisé en ce qu'**il comporte au moins deux panneaux coulissants successifs (50) et, entre ces deux panneaux (50), deux vantaux articulés (52) chacun sur un panneau coulissant (50), les deux vantaux (52) étant articulés l'un à l'autre suivant des bords longitudinaux adjacents et **en ce que** la porte (32) comporte, entre les deux vantaux (52) articulés l'un sur l'autre, une charnière comprenant un élément de liaison articulé (563) monté coulissant par rapport aux deux vantaux (52) perpendiculairement à son axe d'articulation.

## Patentansprüche

1. Transport-Kastenwagen (12) umfassend:
- einen Kasten (18), der mindestens eine seitliche Öffnung (30) aufweist, die einerseits von zwei parallelen Kanten (34, 36) und andererseits von zwei Endstützen (38, 40) begrenzt ist;
- eine Tür (32) zum Verschließen der seitlichen Öffnung (30), wobei die Tür mindestens zwei bewegliche Vorrichtungen (50, 52) aufweist und jede bewegliche Vorrichtung umfasst:
. eine gleitende Tafel (50) zum Verschließen der Öffnung, die zwischen den zwei parallelen Längskanten (34, 36) abgestützt ist und gemäß der durch die Längskanten (34, 36) definierten Richtung in Bezug auf den Kasten gleitend beweglich montiert ist, wobei sie in der Ebene der zwischen den zwei parallelen Längskanten (34, 36) begrenzten Öffnung (30) gehalten wird,
. mindestens einen Flügel, der in Bezug auf die gleitende Tafel (50) um eine Achse (X-X), die sich im Wesentlichen in der Ebene der Öffnung (30) gemäß einem Rand der Tafel erstreckt, zwischen einer Verschlussposition der Öffnung (30) und einer geöffneten Position, in der er aus dem Kasten herausragt, gelenkig angeordnet ist, wobei der oder jeder Flügel (52) an der gleitenden Tafel (50), an der er angelenkt ist, gelagert ist,
. ein Scharnier (400) zur gelenkigen Anordnung des Flügels (52) in Bezug auf die gleitende Tafel (50),
wobei, wenn die Flügel (52) in der Verschlussposition sind, die Flügel (52) und die Tafeln (50) aneinandergrenzen und in Kontakt sind und im Inneren des Kastenwagens eine glatte und kontinuierliche Fläche begrenzen,
**dadurch gekennzeichnet, dass** jede Tafel (50) und jeder angelenkte Flügel (52) gemäß ihrer Dicke einerseits eine krummlinige Nut (318) und andererseits eine Zunge (256) in komplementärer Form umfassen, die geeignet sind, ein Anlegen der Tafel (50) und des Flügels (52) durch Schwenken um ihre gemeinsamen äußeren Ränder und durch Ineinandergreifen der Nut und der Zunge sicherzustellen, und dass die Achsen der Zunge (256) und der Nut (318), die krummlinig und komplementär sind, im Wesentlichen in der Ebene der Außenflächen (208, 308) des Flügels (52) und der gleitenden Tafel (50) angeordnet sind, wenn diese koplanar sind.

2. Kastenwagen nach Anspruch 1, **dadurch gekennzeichnet, dass**, wenn die Flügel (52) in der Verschlussposition sind, der Abstand zwischen den benachbarten Rändern der Flügel (52) und der Tafeln (50) und zwischen den Flügeln (52) gemäß der glatten und kontinuierlichen Fläche kleiner als 2 mm ist.

3. Kastenwagen nach Anspruch 1 oder 2, **dadurch gekennzeichnet, dass**, wenn die Flügel (52) in der Verschlussposition sind, die Unebenheiten der glatten und kontinuierlichen Fläche eine senkrecht zur Fläche gemessene Höhe kleiner als 1 mm aufweisen.

4. Kastenwagen nach einem beliebigen der vorhergehenden Ansprüche, **dadurch gekennzeichnet, dass**, wenn die Flügel (52) in der Verschlussposition sind, die Tafeln (50) und die Flügel (52) in der Verschlussebene zwischen den zwei Endstützen (38, 40) zusammengepresst gehalten sind, wobei sie sich an diesen abstützen.

5. Kastenwagen nach einem beliebigen der vorhergehenden Ansprüche, **dadurch gekennzeichnet, dass** mindestens einer bzw. eine der Flügel und der Tafeln mindestens zwei zusammengesetzte Platten (200, 202, 204; 300, 302, 304) entlang von benachbarten Rändern umfasst, wobei die zwei zusammengesetzten Platten gemäß ihrer Dicke einerseits eine krummlinige Nut (218) und andererseits eine Zunge (217) in komplementärer Form umfassen, die geeignet sind, ein Anliegen der zwei Platten durch Schwenken um ihre gemeinsamen äußeren Ränder und durch Ineinandergreifen der Nut und der Zunge sicherzustellen, und dass die zwei Platten außerdem Mittel (222, 234) zum elastischen Einrasten der zwei Platten aufweisen, um ihre Verriegelung sicherzustellen.

6. Kastenwagen nach einem beliebigen der vorhergehenden Ansprüche, **dadurch gekennzeichnet, dass** die Tür zwischen jeder Tafel und jedem angelenkten Flügel ein elastisches Formgedächtnis-Verbindungsprofil (400), das an der Tafel (50) und dem zugeordneten Flügel (52) befestigt ist, aufweist.

7. Kastenwagen nach einem beliebigen der vorhergehenden Ansprüche, **dadurch gekennzeichnet, dass** zwei benachbarte Flügel (52), jeder an einer gleitenden Tafel (50) angelenkt, gemäß ihren benachbarten Ränder einen Steg (246) und eine Nut (242) umfassen, die einander komplementär sind und in Richtung ihrer Enden jeweils ein konvergierendes und divergierendes Profil aufweisen.

8. Kastenwagen nach Anspruch 7, **dadurch gekennzeichnet, dass** der Steg (246) an seinem Scheitel einen Längskanal (248) aufweist, der mit der Nut (242), wenn die Flügel in ihrer Verschlussposition sind, einen Kanal (250) für das Ableiten von Wasser begrenzt.

9. Kastenwagen nach einem beliebigen der vorhergehenden Ansprüche, **dadurch gekennzeichnet, dass** er zwei Schienen (42, 44) zur Führung der gleitenden Tafeln gemäß der Längskanten aufweist, wobei die Schienen (42, 44) in Bezug auf den Kasten (18) lösbar sind.

10. Kastenwagen nach einem beliebigen der vorhergehenden Ansprüche, **dadurch gekennzeichnet, dass** er gemäß mindestens einer Längskante eine Längsgleitschiene (74) und mindestens eine Schlossanordnung (57, 78, 80) zum Verschließen eines Flügels (52) aufweist, wobei die Schlossanordnung (57, 78, 80) in der Gleitschiene (74) gleitend ist und Mittel (78) zur Blockierung in Bezug auf die Gleitschiene (74) in einer Position aufweist.

11. Kastenwagen nach einem beliebigen der vorhergehenden Ansprüche, **dadurch gekennzeichnet, dass** er mindestens zwei aufeinanderfolgende gleitende Tafeln (50) und zwischen diesen zwei Tafeln (50) zwei jeweils an einer gleitenden Tafel (50) angelenkte Flügel (52) aufweist, wobei die zwei Flügel (52) einer an dem anderen gemäß benachbarter Längsränder angelenkt sind und dass die Tür (32) zwischen den zwei aneinander angelenkten Flügeln (52) ein Scharnier aufweist, das ein angelenktes Verbindungselement (563) umfasst, das in Bezug auf die zwei Flügel (52) senkrecht zu seiner Anlenkachse gleitend montiert ist.

## Claims

1. Transport lorry (12) comprising:
- a body (18) having at least one side opening (30) which is delimited, on the one hand, between two parallel edges (34, 36) and, on the other hand, between two end posts (38, 40);
- a door (32) for closing off the side opening (30), said door comprising at least two movable apparatuses (50, 52), each movable apparatus comprising:
• a sliding panel (50) for closing off the opening, which panel is supported between the two parallel longitudinal edges (34, 36) and is mounted for sliding movement in relation to the body, while being held within the plane of the opening (30) defined between the two parallel longitudinal edges (34, 36), in the direction defined by the said two edges (34, 36);
• at least one leaf which is articulated, in relation to the sliding panel (50), about an axis (X-X) extending substantially within the plane of the opening (30) along one edge of the sliding panel, between a position for closing off the opening (30) and an opening position in which it projects out of the body, the leaf (52), or each leaf (52), being supported by the sliding panel (50) on which it is articulated;
• a hinge (400) for articulating the leaf (52) in relation to the sliding panel (50);
wherein, when the leaves (52) are in the closing-off position, said leaves (52) and the panels (50) are contiguous and in contact and delimit, inside the lorry, a smooth and continuous surface; **characterised in that** each panel (50) and each articulated leaf (52) comprise, along their thickness, in one case a curved groove (318) and, in the other case, a tongue (256) of complementary shape, which groove and tongue are suitable for ensuring docking of the panel (50) and leaf (52) by pivoting about their outer common edges and by interlocking of the groove and tongue, and **in that** the axis of the complementary curved tongue (256) and groove (318) is disposed substantially within the plane of the outer faces (208, 308) of the leaf (52) and sliding panel (50) when the latter are coplanar.

2. Lorry according to Claim 1, **characterised in that**, when the leaves (52) are in the closing-off position, the gap between the adjacent edges of the leaves (52) and panels (50) and between the leaves (52) along the smooth and continuous surface is less than 2 mm.

3. Lorry according to Claim 1 or 2, **characterised in that**, when the leaves (52) are in the closing-off position, the projections on the smooth and continuous surface have a height, measured perpendicularly to the surface, of less than 1 mm.

4. Lorry according to any of the preceding claims, **characterised in that**, when the leaves (52) are in the closing-off position, the panels (50) and leaves (52) are kept compressed within the closing-off plane in the prolongation of one another between the two end posts (38, 40), while being supported on the latter.

5. Lorry according to any of the preceding claims, **characterised in that** at least one of the panels and leaves comprises at least two boards (200, 202, 204; 300, 302, 304) coupled along adjacent edges, said coupled boards comprising, along their thickness, in one case a curved groove (218) and, in the other case, a tongue (217) of complementary shape which is suitable for ensuring docking of the two boards by pivoting about their outer common edges and by interlocking of the groove and tongue, and **in that** the two boards also comprise means (222, 234) for the elastic engagement of the two boards in order to ensure the locking thereof.

6. Lorry according to any of the preceding claims, **characterised in that** the door comprises, between each panel and each articulated leaf, an elastic linking profile (400) with shape memory, fixed onto the panel (50) and the associated leaf (52).

7. Lorry according to any of the preceding claims, **characterised in that** two adjacent leaves (52), each articulated on a sliding panel (50), comprise, along their adjacent edges, a complementary rib (246) and groove (242) having profiles which are convergent and divergent, respectively, towards their end.

8. Lorry according to Claim 7, **characterised in that** the rib (246) comprises, at its top, a longitudinal channel (248) which delimits with the groove (242), when the leaves are in the closing-off position, a conduit (250) for water to run through.

9. Lorry according to any of the preceding claims, **characterised in that** it comprises two rails (42, 44) for guiding the panels that slide along the longitudinal edges, which rails (42, 44) are detachable in relation to the body (18).

10. Lorry according to any of the preceding claims, **characterised in that** it comprises, along at least one longitudinal edge, a longitudinal slide-way (74) and at least one espagnolette striker-plate unit (57, 78, 80) for closing a leaf (52), which striker-plate unit (57, 78, 80) slides within the said slide-way (74) and comprises means (78) for locking it in position in relation to said slide-way (74).

11. Lorry according to any of the preceding claims, **characterised in that** it comprises at least two successive sliding panels (50) and, between the said two panels (50), two leaves (52), each articulated on a sliding panel (50), said two leaves (52) being articulated to one another along adjacent longitudinal edges, and **in that** the door (32) comprises, between the two leaves (52) which are articulated on one another, a hinge comprising an articulated linking element (563) which is mounted for sliding movement in relation to the two leaves (52), perpendicularly to its axis of articulation.
